# NEUE EUROPÄISCHE PATENTSCHRIFT

(11) **EP 3 322 606 B2**
(45) Veröffentlichungstag und Bekanntmachung des Hinweises auf die Entscheidung über den Einspruch: **11.01.2023**
(45) Hinweis auf die Patenterteilung: 29.01.2020
(21) Anmeldenummer: 17710469.2
(22) Anmeldetag: 13.02.2017
(51) Int. Cl.: B60K 6/48, B60K 6/40, B60K 6/38, F16D 21/06

(54) **HYBRIDMODUL**
HYBRID MODULE
MODULE HYBRIDE

(30) Priorität: 06.10.2016 DE 102016219425; 21.12.2016 DE 102016125072
(43) Veröffentlichungstag der Anmeldung: 23.05.2018
(73) Patentinhaber: Schaeffler Technologies AG & Co. KG, 91074 Herzogenaurach (DE)
(72) Erfinder: LORENZ, Elmar, 77836 Rheinmünster Söllingen (DE); NEUKUM, Reiner, 77746 Schutterwald (DE)
(74) Vertreter: Wallinger Ricker Schlotter Tostmann
(86) Internationale Anmeldenummer: PCT/DE2017/100106
(87) Internationale Veröffentlichungsnummer: WO 2018/064998

(56) Entgegenhaltungen:
- EP-A1- 2 287 487
- WO-A1-2015/110108
- WO-A1-2017/028856
- DE-A1-102009 059 944
- DE-A1-102011 117 781
- DE-A1-102011 117 781
- DE-A1-102012 024 699
- DE-A1-102014 014 669
- JP-A- 2004 306 826
- US-A1- 2007 049 445
- US-A1- 2011 240 384

## Beschreibung

Die Erfindung betrifft ein Hybridmodul für ein Kraftfahrzeug, umfassend eine einen Stator und einen Rotor aufweisende elektrische Maschine, eine eine erste und zweite Teilkupplung aufweisende Doppelkupplung, die dazu ausgebildet ist, das Hybridmodul trennbar mit einem Getriebe des Kraftfahrzeugs zu koppeln und eine Trennkupplung, die dazu ausgebildet ist, eine Brennkraftmaschine des Kraftfahrzeugs trennbar mit dem Hybridmodul zu koppeln. Dabei sind die Doppelkupplung und die Trennkupplung radial und axial innerhalb des Rotors angeordnet, und die erste und zweite Teilkupplung sind in Axialrichtung hintereinander angeordnet.

Fahrzeuge mit Hybridantrieb sind hinlänglich bekannt. Diese weisen eine Brennkraftmaschine und eine elektrische Maschine auf, wobei mittels eines Hybridmoduls sichergestellt ist, dass die Brennkraftmaschine mittels der Trennkupplung mit der elektrischen Maschine wirktechnisch gekoppelt werden kann. Ebenso kann die Brennkraftmaschine mit der Trennkupplung von der elektrischen Maschine entkoppelt werden. Ferner weist das Hybridmodul eine Doppelkupplung auf, die dazu dient, ein wirktechnisches Koppeln und Entkoppeln des Hybridantriebs von einem Getriebe des Fahrzeugs zu bewirken. Mit anderen Worten bewirkt die Trennkupplung die Kopplung zwischen elektrischer Maschine und Brennkraftmaschine, wobei die Doppelkupplung anschließend das Hybridmodul mit dem Getriebe koppelt oder von diesem entkoppelt. Bei der gegebenen Anordnung, insbesondere der Anordnung in Form eines P2-Hybridmoduls, stellt die axiale Länge des Hybridmoduls eine kritische Größe dar. Insbesondere in kleineren bzw. Kleinstfahrzeugen ist dabei die Verwendung eines Hybridmoduls nicht oder nur schwierig möglich, da der benötigte Bauraum insbesondere in Axialrichtung nicht oder nur begrenzt zur Verfügung steht.

Aus der DE 10 2012 024 699 A1 ist ein Hybridmodul für ein Kraftfahrzeug bekannt, das eine einen Stator und einen Rotor aufweisende elektrische Maschine, eine eine erste und zweite Teilkupplung aufweisende Doppelkupplung, die dazu ausgebildet ist, das Hybridmodul trennbar mit einem Getriebe des Kraftfahrzeugs zu koppeln, und eine Trennkupplung aufweist, die dazu ausgebildet ist, eine Brennkraftmaschine des Kraftfahrzeugs trennbar mit dem Hybridmodul zu koppeln. Die Doppelkupplung ist radial und axial innerhalb des Rotors angeordnet. Die erste und die zweite Teilkupplung sind in Axialrichtung hintereinander angeordnet.
Bezüglich weiteren Standes der Technik wird auf die US 2007/0049445 A1, die DE 10 2011 117 781 A1, die DE 10 2009 059 944 A1, die DE 10 2014 014 669 A1 und die WO 2015/110108 A1 verwiesen.
Der Erfindung liegt daher die Aufgabe zugrunde ein Hybridmodul anzugeben, das weniger Bauraum in Axialrichtung benötigt.
Diese Aufgabe wird mit den in Anspruch 1 angegebenen Maßnahmen gelöst. Weitere vorteilhafte Ausgestaltungen sind Gegenstand der abhängigen Ansprüche.
Zur Lösung dieser Aufgabe ist bei einem Hybridmodul der eingangs genannten Art erfindungsgemäß vorgesehen, dass die Trennkupplung radial und axial innerhalb des Rotors angeordnet ist und in Radialrichtung näher an der Drehachse des Rotors angeordnet ist als die Doppelkupplung.
Erfindungsgemäß wird somit vorgeschlagen, dass sowohl die Trennkupplung, als auch die Doppelkupplung innerhalb des Rotors angeordnet sind. Der Rotor definiert demnach einen Raum, innerhalb dem die Doppelkupplung und die Trennkupplung sowohl radial, als auch axial aufgenommen sind. Die Doppelkupplung ist dabei radial weiter außen am Rotor bzw. im Rotor angeordnet und die Trennkupplung liegt näher an der Drehachse des Rotors als die Doppelkupplung.
Daraus ergibt sich eine besonders kompakte Bauform, da der Rotor, die Doppelkupplung und die Trennkupplung nicht axial hintereinander angeordnet werden müssen, sondern in Radialrichtung geschachtelt angeordnet sind. Durch den Entfall des zusätzlichen axialen Bauraums, kann das Hybridmodul auch in Kleinstfahrzeugen oder in Fahrzeugen mit quer eingebauten Verbrennungsmotor Verwendung finden. Ferner ist vorteilhafter Weise eine einfache Montage möglich, da das Hybridmodul erfindungsgemäß als kompaktes "add-on"-Modul ausgeführt ist, d.h., dass das Hybridmodul über sein Gehäuse am Verbrennungsmotor und/oder am Getriebe befestigt werden kann.

Besonders bevorzugt kann bei dem erfindungsgemäßen Hybridmodul vorgesehen sein, dass die Doppelkupplung und die Trennkupplung jeweils mittels wenigstens einer Innenlamelle oder Außenlamelle mit verschiedenen Wänden des Rotors gekoppelt sind. Mit anderen Worten bilden verschiedene Wände des Rotors den Innenlamellenträger bzw. den Außenlamellenträger der Teilkupplungen der Doppelkupplung bzw. der Trennkupplung aus, so dass die entsprechenden Innenlamellen oder Außenlamellen der Doppelkupplung oder der Trennkupplung an den verschiedenen Wänden des Rotors angeordnet sind. Dadurch ergibt sich eine direkte Integration der Teilkupplungen der Doppelkupplung sowie der Trennkupplung in die Wände des Rotors. Zusätzliche Bauteile, die als Innenlamellenträger oder Außenlamellenträger fungieren, sind somit entbehrlich, was die Bauteileanzahl verringert und die Kompaktheit des Hybridmoduls weiter verbessert.

Das erfindungsgemäße Hybridmodul kann ferner dahingehend weitergebildet werden, dass die beiden Wände des Rotors, an denen die Doppelkupplung und die Trennkupplung jeweils mittels wenigstens einer Innenlamelle oder Außenlamelle gekoppelt sind, eine Verzahnung aufweisen und einander in Radialrichtung konzentrisch gegenüberliegen. Ersichtlich verlaufen die entsprechenden Wände des Rotors näherungsweise parallel in Axialrichtung und weisen eine Verzahnung auf, die zu der Verzahnung der Innenlamellen bzw. Außenlamellen der Teilkupplungen der Doppelkupplung bzw. der Trennkupplung korrespondiert. Die Teilkupplung ist dabei an einer Wand des Rotors angeordnet, die näher an der Drehachse angeordnet ist, als diejenige Wand des Rotors, an der die Doppelkupplung bzw. die beiden Teilkupplungen der Doppelkupplung angeordnet sind. Die beiden Teilkupplungen der Doppelkupplung sind, wie zuvor beschrieben, in Axialrichtung hintereinander angeordnet. Dadurch ergibt sich ein besonders kompakter Aufbau, da die Doppelkupplung als axiale Doppelkupplung ausgebildet ist und zusammen mit der Trennkupplung innerhalb des Rotors angeordnet ist.

Gemäß einer weiteren Ausgestaltung des erfindungsgemäßen Hybridmoduls kann vorgesehen sein, dass wenigstens eine Betätigungseinrichtung zum Öffnen und/oder Schließen der Trennkupplung oder der ersten oder der zweiten Teilkupplung zumindest abschnittsweise in eine Gehäusewand des Hybridmoduls integriert ist.

Üblicherweise wird im Stand der Technik zusätzlicher Bauraum für die Betätigungseinrichtung bzw. die Betätigungseinrichtungen, die den einzelnen Teilkupplungen bzw. der Trennkupplung zugeordnet sind, vorgehalten. Die entsprechenden Betätigungseinrichtungen dienen dem Öffnen und/oder dem Schließen der einzelnen Kupplungen, wobei es unerheblich ist, ob die einzelnen Teilkupplungen bzw. die Trennkupplung als "normally open" oder "normally closed" Kupplungen ausgebildet sind.

Gemäß dieser Ausgestaltung wird vorgeschlagen, wenigstens eine der Betätigungseinrichtungen in eine Gehäusewand des Hybridmoduls zu integrieren. Das Gehäuse des Hybridmoduls weist dazu bevorzugter Weise in dessen Wand eine Ausnehmung auf, innerhalb der die Betätigungseinrichtung aufgenommen ist. Dadurch reduziert sich der benötigte Bauraum, da die Betätigungseinrichtung zumindest abschnittsweise in der Gehäusewand aufgenommen ist, so dass der benötigte Bauraum sich um diesen Anteil, in dem die Betätigungseinrichtung in der Gehäusewand aufgenommen ist, reduziert.

Ferner kann bei dem erfindungsgemäßen Hybridmodul vorgesehen sein, dass die der Trennkupplung zugeordnete Betätigungseinrichtung als Zentralausrücker ausgebildet ist. Demnach kann die Betätigungseinrichtung, die zum Öffnen und/oder Schließen der Trennkupplung vorgesehen ist, als Zentralausrücker (CSC, concentric slave cylinder) ausgebildet sein.

Besonders bevorzugt kann bei dem erfindungsgemäßen Hybridmodul vorgesehen sein, dass die der ersten und/oder die der zweiten Teilkupplung zugeordnete Betätigungseinrichtung als Zentralausrücker ausgebildet ist oder dass die erste und/oder die zweite Teilkupplung mittels einer Dreheinführung betätigbar ist oder dass die der ersten Teilkupplung zugeordnete Betätigungseinrichtung als Zentralausrücker und die zweite Teilkupplung mittels einer Dreheinführung betätigbar ist oder dass die der zweiten Teilkupplung zugeordnete Betätigungseinrichtung als Zentralausrücker und die erste Teilkupplung mittels einer Dreheinführung betätigbar ist.

Grundsätzlich kann demnach beliebig vorgesehen sein, dass eine der beiden Teilkupplungen der Doppelkupplung oder die Trennkupplung als Zentralausrücker ausgebildet ist oder mittels einer Dreheinführung betätigbar ist. Über die Dreheinführung wird ein Arbeitsfluid, insbesondere ein Öl, in einen entsprechenden Druckraum der Betätigungseinrichtung eingeführt, so dass sich der Druck in dem Druckraum verändert. Durch entsprechendes Fördern des Arbeitsfluids in den oder aus dem Druckraum kann sonach eine Verstellung des dem Druckraum zugeordneten Kolbens bewirkt werden, über dessen Verstellweg ein Öffnen bzw. ein Schließen der entsprechenden Kupplung bewirkt werden kann.

Gemäß einer weiteren vorteilhaften Ausgestaltung des erfindungsgemäßen Hybridmoduls kann vorgesehen sein, dass wenigstens eine Betätigungseinrichtung einen relativ zu einem Gehäusewandabschnitt beweglichen Kolben aufweist, wobei wenigstens ein Dichtelement an dem Kolben und wenigstens ein Dichtelement an dem Gehäusewandabschnitt angeordnet ist.

Die beiden Dichtelemente können beispielsweise als O-Ring-Dichtungen ausgebildet sein, wobei eines der beiden Dichtelemente an dem relativ zu dem Gehäusewandabschnitt beweglichen Kolben und das andere Dichtelement in dem Gehäusewandabschnitt angeordnet ist. Der Kolben und der Gehäusewandabschnitt weisen dazu bevorzugt eine Ausnehmung auf, die dazu ausgebildet ist, das entsprechende Dichtelement zumindest abschnittsweise aufzunehmen.

Besonders bevorzugt ist bei dieser Ausgestaltung vorgesehen, dass das wenigstens eine Dichtelement an dem Kolben und/oder das wenigstens eine Dichtelement an der Gehäusewand vorgespannt sind. Durch die vorgesehene Vorspannung der Dichtelemente im eingebauten Zustand, werden geometrische Toleranzen der Dichtelemente und damit einhergehende Probleme bei der Montage reduziert, wodurch sich die Montage erheblich vereinfacht.

Das erfindungsgemäße Hybridmodul sieht in einer weiteren Ausgestaltung der Erfindung vor, dass die Trennkupplung und die Doppelkupplung mittels eines Niederdrucksystems oder eines Hochdrucksystems betätigbar sind, wobei bei dem Niederdrucksystem die Trennkupplung mittels eines Zentralausrückers und die Doppelkupplung mittels einer Dreheinführung betätigbar ist und wobei bei dem Hochdrucksystem die Trennkupplung und die Doppelkupplung mittels Zentralausrückern betätigbar sind.

Demnach ist vorgesehen, dass die Betätigung des Hybridmoduls bzw. der Trennkupplung oder Doppelkupplung zum einen als Niederdrucksystem und zum anderen als Hochdrucksystem ausgeführt sein kann. Das Niederdrucksystem zeichnet sich dadurch aus, dass die Trennkupplung mittels einer als Zentralausrücker ausgebildeten Betätigungseinrichtung betätigbar ist und die beiden Teilkupplungen der Doppelkupplung mittels Dreheinführungen betätigbar sind. Der dazu notwendige Arbeitsdruck, um die einzelnen Betätigungseinrichtungen betreiben zu können, liegt dabei gegenüber dem Hochdrucksystem niedriger.

Demgegenüber kann die Betätigung des Hybridmoduls bzw. der beiden Teilkupplungen und der Trennkupplung als Hochdrucksystem ausgeführt sein, d.h., dass sämtliche Betätigungseinrichtung als Zentralausrücker ausgebildet sind, wobei der Betriebsdruck im Falle des Hochdrucksystems gegenüber dem Niederdrucksystem höher liegt.

Besonders bevorzugt kann dabei vorgesehen sein, dass das Niederdrucksystem einen Betriebsdruck von 10 bis 18 bar, besonders bevorzugt 14 bar aufweist, oder dass das Hochdrucksystem einen Betriebsdruck von 30 bis 46 bar aufweist, besonders bevorzugt 38 bar.

Die Erfindung wird nachfolgend anhand von Ausführungsbeispielen unter Bezugnahme auf die Zeichnungen erläutert. Die Zeichnungen sind schematische Darstellungen und zeigen:
- Figur 1: ein erfindungsgemäßes Hybridmodul gemäß einem ersten Ausführungsbeispiel; und
- Figur 2: ein erfindungsgemäßes Hybridmodul gemäß einem zweiten Ausführungsbeispiel.

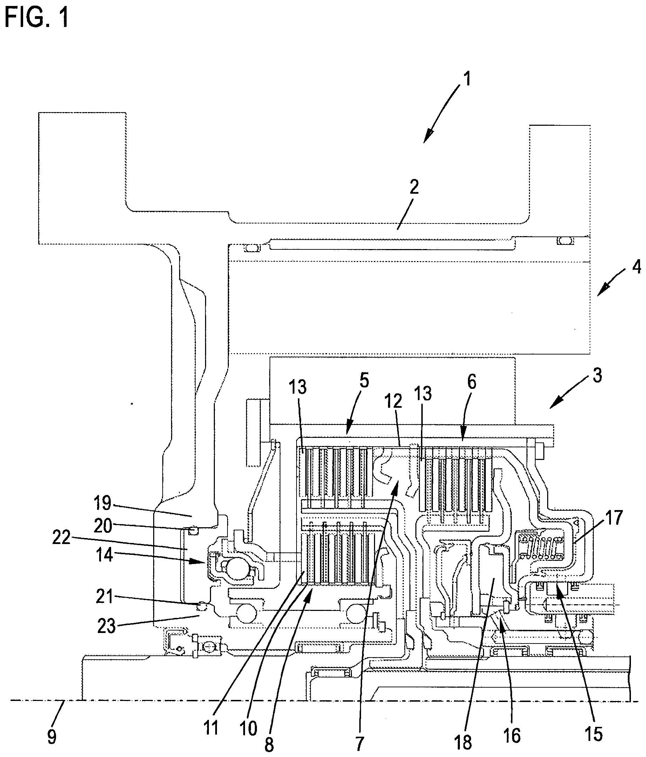

Figur 1 zeigt ein Hybridmodul 1 für ein nicht näher dargestelltes Kraftfahrzeug, umfassend eine einen Stator 2 und einen Rotor 3 aufweisende elektrische Maschine 4, eine eine erste und zweite Teilkupplung 5, 6 aufweisende Doppelkupplung 7, die dazu ausgebildet ist, das Hybridmodul 1 trennbar mit einem Getriebe des Kraftfahrzeugs (nicht dargestellt) zu koppeln und eine Trennkupplung 8, die dazu ausgebildet ist, eine Brennkraftmaschine (nicht dargestellt) des Kraftfahrzeugs trennbar mit dem Hybridmodul 1 zu koppeln.

Ersichtlich ist die Doppelkupplung 7 mit ihren beiden Teilkupplungen 5, 6 und die Trennkupplung 8 sowohl radial als auch axial innerhalb des Rotors 3 angeordnet. Die erste und die zweite Teilkupplung 5, 6 sind in Axialrichtung hintereinander angeordnet, wobei die Doppelkupplung 7 in Radialrichtung weiter von einer Drehachse 9 des Rotors 3 entfernt ist, als die Trennkupplung 8. Mit anderen Worten ist die Trennkupplung 8 in Radialrichtung näher an der Drehachse 9 des Rotors 3 angeordnet als die Doppelkupplung 7.

Daraus ergibt sich ein besonders kompakter Aufbau, da der für den Rotor 3, die erste und zweite Teilkupplung 5, 6 der Doppelkupplung 7 und die Trennkupplung 8 benötigte Bauraum reduziert wird, da die einzelnen Baugruppen radial bzw. axial ineinander geschachtelt sind. Demnach kann die Doppelkupplung 7 und die Trennkupplung 8 innerhalb des Rotors 3 integriert angeordnet sein.

Die Trennkupplung 8 ist ersichtlich an einer Wand 10 des Rotors 3 angeordnet, d.h., dass die Wand 10 eine Verzahnung aufweist, an der Innenlamellen 11 der Trennkupplung 8 mittels einer korrespondierenden Verzahnung angeordnet sind. Ebenso sind die erste und die zweite Teilkupplung 5, 6 an einer Wand 12 des Rotors angeordnet, d.h., dass Außenlamellen 13 der Teilkupplungen 5, 6 mittels einer korrespondierenden Verzahnung an der Wand 12 des Rotors 3 angeordnet sind. Demnach sind die Doppelkupplung 7 und die Trennkupplung 8 in die Wände 10, 12 des Rotors 3 integriert. Der Rotor 3 übernimmt mit den Wänden 10, 12 die Funktion des Innenlamellenträgers bzw. des Außenlamellenträger. Die beiden Wände 10, 12 des Rotors 3 sind dabei ersichtlich konzentrisch angeordnet, wobei die Verzahnungen an den Wänden 10, 12 in Radialrichtung einander gegenüberliegen.

Das Hybridmodul 1 weist eine Betätigungseinrichtung 14 auf, die beispielweise als Zentralausrücker ausgebildet ist. Die Betätigungseinrichtung 14 dient zum Öffnen und/oder Schließen der Trennkupplung 8. Entsprechend weist das Hybridmodul 1 eine Betätigungseinrichtung 15 und eine Betätigungseinrichtung 16 auf, die den Teilkupplungen 5, 6 der Doppelkupplung 7 zugeordnet sind. Die Betätigungseinrichtungen 15, 16 weisen Dreheinführungen auf, mittels derer ein Arbeitsfluid in die entsprechenden Druckräume 17, 18 gefördert werden kann und mittels eines Betätigungselements entgegen der Federkraft eines Rückstellelements eine Betätigungskraft auf die Lamellenpakete der Teilkupplungen 5, 6 bewirkt werden kann.

Ersichtlich ist die Betätigungseinrichtung 14 zumindest abschnittsweise in eine Gehäusewand 19 des Hybridmoduls 1 integriert. Dadurch erhöht sich die Kompaktheit des Aufbaus weiter.

Die Betätigungseinrichtung 14 weist ferner zwei Dichtelemente 20, 21 auf, wobei das Dichtelement 20 an einem beweglichen Kolben 22 und das Dichtelement 21 an einem Gehäusewandabschnitt 23 des Gehäuses des Hybridmoduls 1 angeordnet ist. Ersichtlich sind die beiden Dichtelemente in Ausnehmungen im Kolben 22 bzw. im Gehäusewandabschnitt 23 aufgenommen. Die Dichtelemente 20, 21 sind vorgespannt, so dass geometrische Toleranzen der Dichtelemente und damit einhergehende Montageprobleme reduziert werden können.

Das Hybridmodul 1 von Figur 1 ist ersichtlich über ein Niederdrucksystem betätigt, da die Betätigungseinrichtung 14 als Zentralausrücker und die Betätigungseinrichtungen 15, 16 mittels einer Dreheinführung betätigbar sind. Der Arbeitsdruck des Arbeitsfluids beträgt bevorzugt 14 bar.

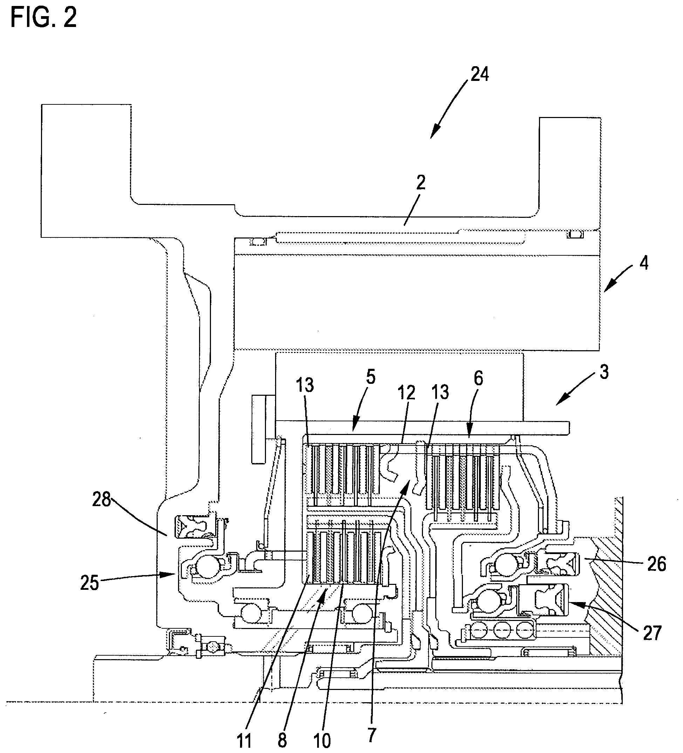

Figur 2 zeigt ein Hybridmodul 24 gemäß einem zweiten Ausführungsbeispiel. Die Hybridmodule 1, 24 aus den Figuren 1 und 2 sind grundsätzlich gleich aufgebaut, so dass gleiche Bezugszeichen für gleiche Bauteile verwendet werden. Insbesondere weist das Hybridmodul 24 ebenfalls einen Stator 2 und einen Rotor 3 auf, die einer elektrischen Maschine 4 zugeordnet sind. Ferner ist an dem Rotor 3 radial und axial innerhalb des Rotors 3 eine Doppelkupplung 7 angeordnet, die eine erste Teilkupplung 5 und eine zweite Teilkupplung 6 aufweist. Radial innerhalb der Doppelkupplung 7 ist eine Trennkupplung 8 an dem Rotor 3 angeordnet. Im Unterschied zu dem Hybridmodul 1 von Figur 1 weist das Hybridmodul 24 drei Betätigungseinrichtungen 25, 26, 27 auf, die als Zentralausrücker ausgebildet sind. Das Hybridmodul 24 von Figur 2 ist ersichtlich über ein Hochdrucksystem betätigbar. Der Arbeitsdruck beträgt besonders bevorzugt 38 bar.

Ersichtlich ist die Betätigungseinrichtung 25 in einem Gehäusewandabschnitt 28 des Hybridmoduls 24 integriert. Aufgrund der radialen und axialen Schachtelung der Doppelkupplung 7 und der Trennkupplung 8 ist ein besonders kompakter Aufbau des Hybridmoduls 1, 24 gewährleistet. Es ist somit möglich das Hybridmodul 1, 24 auch bei Kleinstfahrzeugen bzw. bei Fahrzeugen mit besonders wenig Bauraum und/oder quer eingebauter Brennkraftmaschine einzusetzen.

Selbstverständlich sind die einzelnen Ausführungsbeispiele beliebig miteinander kombinierbar.

### Bezugszeichenliste

- 1: Hybridmodul
- 2: Stator
- 3: Rotor
- 4: elektrische Maschine
- 5: erste Teilkupplung
- 6: zweite Teilkupplung
- 7: Doppelkupplung
- 8: Trennkupplung
- 9: Drehachse
- 10: Wand
- 11: Innenlamelle
- 12: Wand
- 13: Außenlamelle
- 14: Betätigungseinrichtung
- 15: Betätigungseinrichtung
- 16: Betätigungseinrichtung
- 17: Druckraum
- 18: Druckraum
- 19: Gehäusewand
- 20: Dichtelement
- 21: Dichtelement
- 22: Kolben
- 23: Gehäusewandabschnitt
- 24: Hybridmodul
- 25: Betätigungseinrichtung
- 26: Betätigungseinrichtung
- 27: Betätigungseinrichtung
- 28: Gehäusewandabschnitt

## Patentansprüche

1. Hybridmodul (1, 24) für ein Kraftfahrzeug, das aufweist:
eine einen Stator (2) und einen Rotor (3) aufweisende elektrische Maschine (4);
eine eine erste und zweite Teilkupplung (5, 6) aufweisende Doppelkupplung (7), die dazu ausgebildet ist, das Hybridmodul (1, 24) trennbar mit einem Getriebe des Kraftfahrzeugs zu koppeln; und
eine Trennkupplung (8), die dazu ausgebildet ist, eine Brennkraftmaschine des Kraftfahrzeugs trennbar mit dem Hybridmodul (1, 24) zu koppeln,
wobei
die Doppelkupplung (7) und die Trennkupplung (8) radial und axial innerhalb des Rotors (3) angeordnet sind,
die erste und die zweite Teilkupplung (5, 6) in Axialrichtung hintereinander angeordnet sind, und
die Trennkupplung (8) in Radialrichtung näher an der Drehachse (9) des Rotors (3) angeordnet ist als die Doppelkupplung (7),
**dadurch gekennzeichnet, dass** das Hybridmodul über sein Gehäuse an der Brennkraftmaschine und/oder an dem Getriebe befestigt werden kann.

2. Hybridmodul nach Anspruch 1, **dadurch gekennzeichnet, dass** die Doppelkupplung (7) und die Trennkupplung (8) jeweils mittels wenigstens einer Innenlamelle (11) oder Außenlamelle (13) mit verschiedenen Wänden (10, 12) des Rotors (3) gekoppelt sind.

3. Hybridmodul nach Anspruch 2, **dadurch gekennzeichnet, dass** die verschiedenen Wände (10, 12) des Rotors (3) eine Verzahnung aufweisen und einander in Radialrichtung konzentrisch gegenüberliegen.

4. Hybridmodul nach einem der vorangehenden Ansprüche, **dadurch gekennzeichnet, dass** wenigstens eine Betätigungseinrichtung (14 - 16, 25 - 27) zum Öffnen und/oder Schließen der Trennkupplung (8) oder der ersten oder der zweiten Teilkupplung (5, 6) zumindest abschnittsweise in eine Gehäusewand (19) des Hybridmoduls (1, 24) integriert ist.

5. Hybridmodul nach Anspruch 4, **dadurch gekennzeichnet, dass** eine der Trennkupplung (8) zugeordnete Betätigungseinrichtung (14, 25) als Zentralausrücker ausgebildet ist.

6. Hybridmodul nach Anspruch 4 oder 5, **dadurch gekennzeichnet, dass** eine der ersten und/oder eine der zweiten Teilkupplung (5, 6) zugeordnete Betätigungseinrichtung (26, 27) als Zentralausrücker ausgebildet ist oder dass die erste und/oder die zweite Teilkupplung (5, 6) mittels einer Dreheinführung betätigbar ist oder dass die der ersten Teilkupplung (5, 6) zugeordnete Betätigungseinrichtung als Zentralausrücker (26) ausgebildet ist und die zweite Teilkupplung (5, 6) mittels einer Dreheinführung betätigbar ist oder dass die der zweiten Teilkupplung (5, 6) zugeordnete Betätigungseinrichtung (27) als Zentralausrücker ausgebildet ist und die erste Teilkupplung (5, 6) mittels einer Dreheinführung betätigbar ist.

7. Hybridmodul nach einem der Ansprüche 4 bis 6, **dadurch gekennzeichnet, dass** die wenigstens eine Betätigungseinrichtung (14- 16, 25 - 27) einen relativ zu einem Gehäusewandabschnitt (23, 28) beweglichen Kolben (22) aufweist, wobei wenigstens ein Dichtelement (20) an dem Kolben (22) und wenigstens ein Dichtelement (21) an dem Gehäusewandabschnitt (23) angeordnet ist.

8. Hybridmodul nach Anspruch 7, **dadurch gekennzeichnet, dass** das wenigstens eine Dichtelement (20) an dem Kolben (22) und/oder das wenigstens eine Dichtelement (21) an dem Gehäusewandabschnitt (23) vorgespannt sind.

9. Hybridmodul nach einem der Ansprüche 4 bis 8, **dadurch gekennzeichnet, dass** die Trennkupplung (8) und die Doppelkupplung (7) mittels eines Niederdrucksystems oder eines Hochdrucksystems betätigbar ist, wobei bei dem Niederdrucksystem die Trennkupplung (8) mittels eines Zentralausrückers und die Doppelkupplung (7) mittels einer Dreheinführung betätigbar ist und wobei bei dem Hochdrucksystem die Trennkupplung (8) und die Doppelkupplung (7) mittels Zentralausrückern betätigbar sind.

10. Hybridmodul nach Anspruch 9, **dadurch gekennzeichnet, dass** das Niederdrucksystem einen Betriebsdruck von 10 bis 18 bar oder das Hochdrucksystem einen Betriebsdruck von 30 bis 46 bar aufweist.

## Claims

1. Hybrid module (1, 24) for a motor vehicle, which hybrid module (1, 24) comprises:
an electric machine (4) which comprises a stator (2) and a rotor (3);
a double clutch (7) which comprises a first and second component clutch (5, 6) and is configured to couple the hybrid module (1, 24) to a transmission of the motor vehicle such that it can be disconnected; and
a separating clutch (8) which is configured to couple an internal combustion engine of the motor vehicle to the hybrid module (1, 24) such that it can be disconnected,
the double clutch (7) and the separating clutch (8) being arranged radially and axially within the rotor (3),
the first and the second component clutch (5, 6) being arranged behind one another in the axial direction, and
the separating clutch (8) being arranged closer in the radial direction to the rotational axis (9) of the rotor (3) than the double clutch (7),
**characterized in that** the hybrid module can be attached via its housing to the internal combustion engine and/or to the transmission.

2. Hybrid module according to Claim 1, **characterized in that** the double clutch (7) and the separating clutch (8) are coupled in each case by means of at least one inner disc (11) or outer disc (13) to different walls (10, 12) of the rotor (3).

3. Hybrid module according to Claim 2, **characterized in that** the different walls (10, 12) of the rotor (3) have a toothing system and lie concentrically opposite one another in the radial direction.

4. Hybrid module according to one of the preceding claims, **characterized in that** at least one actuating device (14-16, 25-27) for opening and/or closing the separating clutch (8) or the first or the second component clutch (5, 6) is integrated at least in sections into a housing wall (19) of the hybrid module (1, 24).

5. Hybrid module according to Claim 4, **characterized in that** an actuating device (14, 25) which is assigned to the separating clutch (8) is configured as a central clutch operator.

6. Hybrid module according to Claim 4 or 5, **characterized in that** an actuating device (26, 27) which is assigned to the first component clutch (5, 6) and/or an actuating device (26, 27) which is assigned to the second component clutch (5, 6) are/is configured as a central clutch operator, or **in that** the first and/or the second component clutch (5, 6) can be actuated by means of a rotary inlet, or **in that** the actuating device which is assigned to the first component clutch (5, 6) is configured as a central clutch operator (26) and the second component clutch (5, 6) can be actuated by means of a rotary inlet, or **in that** the actuating device (27) which is assigned to the second component clutch (5, 6) is configured as a central clutch operator and the first component clutch (5, 6) can be actuated by means of a rotary inlet.

7. Hybrid module according to one of Claims 4 to 6, **characterized in that** the at least one actuating device (14-16, 25-27) has a piston (22) which can be moved relative to a housing wall section (23, 28), at least one sealing element (20) being arranged on the piston (22) and at least one sealing element (21) being arranged on the housing wall section (23).

8. Hybrid module according to Claim 7, **characterized in that** the at least one sealing element (20) is prestressed on the piston (22) and/or the at least one sealing element (21) is prestressed on the housing wall section (23).

9. Hybrid module according to one of Claims 4 to 8, **characterized in that** the separating clutch (8) and the double clutch (7) can be actuated by means of a low pressure system or a high pressure system, it being possible in the case of the low pressure system for the separating clutch (8) to be actuated by means of a central clutch operator and for the double clutch (7) to be actuated by means of a rotary inlet, and it being possible in the case of the high pressure system for the separating clutch (8) and the double clutch (7) to be actuated by means of central clutch operators.

10. Hybrid module according to Claim 9, **characterized in that** the low pressure system has an operating pressure of from 10 to 18 bar, or the high pressure system has an operating pressure of from 30 to 46 bar.

## Revendications

1. Module hybride (1, 24) pour un véhicule automobile, lequel module hybride comprend:
une machine électrique (4) comprenant un stator (2) et un rotor (3);
un embrayage double (7) comprenant un premier et un deuxième embrayage partiel (5, 6), lequel embrayage double est conçu pour accoupler de manière désaccouplable le module hybride (1, 24) à une boite de vitesses du véhicule automobile; et
un embrayage de coupure (8) qui est conçu pour accoupler de manière désaccouplable un moteur à combustion interne du véhicule automobile au module hybride (1, 24), dans lequel
l'embrayage double (7) et l'embrayage de coupure (8) sont disposés radialement et axialement à l'intérieur du rotor (3), le premier et le deuxième embrayage partiel (5, 6) sont disposés l'un derrière l'autre dans la direction axiale et l'embrayage de coupure (8) est, dans la direction radiale, disposé plus près de l'axe de rotation (9) du rotor (3) que ne l'est l'embrayage double (7),
**caractérisé en ce que** le module hybride peut être fixé au moteur à combustion interne et/ou à la boite de vitesses par l'intermédiaire de son boîtier.

2. Module hybride selon la revendication 1, **caractérisé en ce que** l'embrayage double (7) et l'embrayage de coupure (8) sont accouplés respectivement à différentes parois (10, 12) du rotor (3) au moyen d'au moins un disque intérieur (11) ou disque extérieur (13).

3. Module hybride selon la revendication 2, **caractérisé en ce que** les différentes parois (10, 12) du rotor (3) comprennent une denture et se font face de manière concentrique dans la direction radiale.

4. Module hybride selon l'une des revendications précédentes, **caractérisé en ce qu'**au moins un dispositif d'actionnement (14 - 16, 25 - 27) servant à l'ouverture et/ou à la fermeture de l'embrayage de coupure (8) ou du premier ou du deuxième embrayage partiel (5, 6) est intégré au moins dans certaines régions dans une paroi de carter (19) du module hybride (1, 24).

5. Module hybride selon la revendication 4, **caractérisé en ce qu'**un dispositif d'actionnement (14, 25) associé à l'embrayage de coupure (8) est réalisé sous forme de dispositif de débrayage central.

6. Module hybride selon la revendication 4 ou 5, **caractérisé en ce qu'**un dispositif d'actionnement associé au premier embrayage partiel et/ou un dispositif d'actionnement (26, 27) associé au deuxième embrayage partiel (5, 6) sont réalisés sous forme de dispositif de débrayage central, ou **en ce que** le premier et/ou le deuxième embrayage partiel (5, 6) peuvent être actionnés au moyen d'un raccord tournant, ou **en ce que** le dispositif d'actionnement associé au premier embrayage partiel (5, 6) est réalisé sous forme de dispositif de débrayage central (26) et le deuxième embrayage partiel (5, 6) peut être actionné au moyen d'un raccord tournant, ou **en ce que** le dispositif d'actionnement (27) associé au deuxième embrayage partiel (5, 6) est réalisé sous forme de dispositif de débrayage central et le premier embrayage partiel (5, 6) peut être actionné au moyen d'un raccord tournant.

7. Module hybride selon l'une des revendications 4 à 6, **caractérisé en ce que** ledit au moins un dispositif d'actionnement (14 - 16, 25 - 27) comprend un piston (22) mobile par rapport à une partie de paroi de carter (23, 28), au moins un élément d'étanchéité (20) étant disposé sur le piston (22) et au moins et un élément d'étanchéité (21) étant disposé sur la partie de paroi de carter (23).

8. Module hybride selon la revendication 7, **caractérisé en ce que** ledit au moins un élément d'étanchéité (20) est précontraint sur le piston (22) et/ou ledit au moins un élément d'étanchéité (21) est précontraint sur 1a partie de paroi de carter (23).

9. Module hybride selon l'une des revendications 4 à 8, **caractérisé en ce que** l'embrayage de coupure (8) et l'embrayage double (7) peuvent être actionnés au moyen d'un système à basse pression ou d'un système à haute pression, l'embrayage de coupure (8) pouvant être actionné au moyen d'un dispositif de débrayage central et l'embrayage double (7) pouvant être actionné au moyen d'un raccord tournant dans le système à basse pression, et l'embrayage de coupure (8) et l'embrayage double (7) pouvant être actionnés au moyen de dispositifs de débrayage centraux dans le système à haute pression.

10. Module hybride selon la revendication 9, **caractérisé en ce que** le système à basse pression présente une pression de fonctionnement de 10 à 18 bars ou le système à haute pression présente une pression de fonctionnement de 30 à 46 bars.
